# FASCICULE DE BREVET EUROPEEN

(11) **EP 2 423 764 B1**
(45) Date de publication et mention de la délivrance du brevet: **27.03.2013**
(21) Numéro de dépôt: 11405300.2
(22) Date de dépôt: 15.08.2011
(51) Int. Cl.: G04D 7/08, G04D 7/10, G01N 3/00

(54) **Dispositif pour la mesure du couple d'un spiral**
Vorrichtung zum Messen des Drehmomentes einer Spirale
Device for measuring the torque of a hairspring

(30) Priorité: 31.08.2010 EP 10405156
(43) Date de publication de la demande: 29.02.2012
(73) Titulaire: Rolex S.A., 1211 Genève 26 (CH)
(72) Inventeur: Cerutti, Marc, 74160 Saint-Julien-en-Genevois (FR)
(74) Mandataire: Moinas & Savoye SA

(56) Documents cités:
- CH-A- 372 610
- DE-A1- 1 523 801

## Description

La présente invention se rapporte à un dispositif pour la mesure du couple d'un spiral pour oscillateur balancier-spiral, comprenant un arbre, un élément de référence, comme un spiral ou un volant d'inertie, associé audit arbre, des moyens de pivotement dudit arbre, une assise ménagée sur cet arbre, dont le diamètre est dimensionné pour permettre une liaison d'entraînement par friction avec la paroi d'une ouverture axiale d'une virole solidaire de l'extrémité interne dudit spiral et des moyens pour maintenir l'extrémité externe dudit spiral fixe par rapport audit arbre au cours de la mesure.

Les imprécisions et dispersions géométriques du procédé de fabrication d'un spiral, bien que faibles, engendrent néanmoins une dispersion du couple des spiraux par rapport à une valeur cible de typiquement 1%. Ceci est observé aussi bien sur les spiraux de type spirale d'Archimède réalisés à partir de fils d'alliage métallique comme les alliages Invar^{®}, Elinvar^{Ⓡ} ou Parachrom^{Ⓡ}, que sur les spiraux obtenus par des procédés de micro-fabrication à partir de plaques de silicium, diamant ou quartz.

La précision de marche exigée d'un oscillateur balancier-spiral est de l'ordre de quelques secondes par jour, ce qui représente une précision de quelques dizaines de ppm. La fréquence d'oscillation des oscillateurs balancier-spiral peut être ajustée par divers moyens, comme par exemple par des écrous ou des masselottes dont la position par rapport à la serge du balancier est réglable, ce qui modifie l'inertie du balancier. La plage d'ajustement est de typiquement 100 s/j, ce qui est insuffisant pour obtenir une marche précise en associant de façon arbitraire un balancier et un spiral.

Pour cette raison, il est nécessaire de mesurer les caractéristiques du spiral et/ou du balancier avant de les associer; par un procédé que l'on appelle appairage ou appariage. Comme exposé ci-dessous, les procédés d'appairage connus de l'état de la technique ne sont pas satisfaisants, en particulier pour des spiraux réalisés en un matériau ne montrant pas de domaine de déformation plastique, comme par exemple le silicium.

La fréquence propre f du système oscillant mécanique d'une montre constitué par un spiral et un balancier est de f = (1/2π) √ (C/I), où C est le couple du spiral et I le moment d'inertie de l'ensemble du système oscillant (en première approximation égal au moment d'inertie du balancier). Le balancier et le spiral peuvent être calibrés pour que la fréquence propre recherchée soit obtenue avec une précision d'au moins deux à cinq minutes par jour, donc d'un ordre de grandeur de 1‰. Le réglage fin est ensuite effectué sur la montre, par exemple à l'aide d'une raquette ou de moyens d'ajustement de l'inertie d'un balancier à inertie réglable au moyen d'écrous, de vis ou de masselottes, déplaçables selon un axe radial par rapport au volant d'inertie que constitue le balancier.

Selon la « Théorie d'horlogerie » (Reymondin et al., Simonin 1998), il existe trois méthodes d'appairage d'un spiral avec un balancier pour former un oscillateur balancier-spiral de fréquence donnée :
● Une mesure de marche de l'oscillateur balancier-spiral comparative par rapport à un balancier-spiral de référence, avec comparaison par battement ou déphasage, et ajustement de l'inertie du balancier et/ou de la longueur active du spiral ;
● Une comparaison de la fréquence de l'oscillateur balancier-spiral avec un oscillateur de haute précision comme un quartz, et ajustement comme ci-dessus ;
● Le tri d'un ensemble de spiraux et de balanciers en classes, avec un appairage d'un spiral et d'un balancier de classes correspondantes pour obtenir un oscillateur balancier-spiral de fréquence donnée avec un écart maximal de ±2 minutes/jour par rapport à la fréquence cible.

Deux méthodes de mesures existent, la méthode statique qui consiste à mesurer le couple du spiral, tel que décrit dans le US 2'384'520 ou dans le EP 2 128 723 et la méthode dynamique, décrite notamment par le FR 1 502 464 ou dans le CH 690 874.

Ces mesures peuvent être utilisées soit pour régler la fréquence en modifiant l'inertie du balancier par enlèvement de matière à l'aide d'une fraise (CH 690 874) ou d'un laser (CH 609 196) ou en ajustant la longueur du spiral comme dans le FR 1 502 464, soit pour répartir les spiraux et les balanciers par classes en fonction du couple des spiraux et de l'inertie des balanciers, comme décrit notamment par P.-L. Gagnebin dans les actes du Congrès Suisse de Chronométrie 1966, p. 321.

Cette procédure consiste à répartir les balanciers et les spiraux en classes par mesure comparative avec une référence, et d'associer un balancier et un spiral de classe correspondante. Une possibilité pour effectuer la mesure du couple d'un spiral consiste à fixer son extrémité interne à une virole que l'on chasse sur un arbre associé à un volant (balancier) d'inertie déterminée, et à mesurer la fréquence résultante de cet oscillateur, ce qui permet de déterminer le couple du spiral par mesure dynamique, l'inertie du balancier étant connue. Après cette opération de mesure, le spiral doit être détaché du balancier de référence.

On peut aussi effectuer une mesure statique par comparaison du couple du spiral à tester avec celui d'un spiral de référence, comme dans le US 2'384'520 ou dans le EP 2 128 723 susmentionnés.

La demande de brevet allemand publiée sous le numéro DE 15 23 801 concerne un dispositif de comptage avec un élément élastique sur l'arbre, prévu pour fonctionner avec un spiral sans virole. Ce système (appelé ci-dessous « système Kiesewetter », du nom de son inventeur) est conçu pour des spiraux dont l'extrémité est directement fixée à l'axe et il ne fonctionne que dans un cas très particulier: il vise à permettre le comptage d'un spiral sans virole, directement rattaché à l'arbre de balancier. Il n'est pas utilisable avec un arbre de balancier standard. De plus, la fixation d'un spiral directement à l'arbre n'est pas dénuée de problèmes, raison pour laquelle ce système n'a pas trouvé d'utilisation pratique en horlogerie. En effet, cette fixation est effectuée par soudage. Or, ce soudage de l'extrémité du spiral directement sur l'arbre doit être parfaitement maîtrisé pour que le spiral soit centré et plan. Le soudage doit être mécaniquement robuste, ce qui est loin d'être garanti pour une telle configuration. De plus, le spiral ne peut pas être démonté, ce qui est rédhibitoire car il faut alors changer l'ensemble balancier-spiral en cas de problème. Par exemple, si les pivots sont endommagés suite à un choc, il faut changer l'ensemble au lieu de changer uniquement l'arbre après démontage des différents éléments, ce qui implique un surcoût considérable.

Le système Kiesewetter ne fonctionne donc qu'avec des spiraux directement attachés à l'axe et il n'est pas directement transposable à un spiral comportant une virole, car aucun élément sur la virole n'est prévu pour permettre la solidarisation à l'axe par pinçage. Si un tel élément devait être ajouté à la virole, l'arbre du balancier destiné à réaliser l'oscillateur balancier-spiral devrait lui aussi être modifié.

De plus, ce principe est difficile à mettre en oeuvre sur un spiral en matériau fragile comme le Si, car le pinçage/serrage risque d'endommager la lame et l'extrémité interne du spiral devrait ensuite être fixée à l'arbre du balancier pour former l'oscillateur balancier spiral. Le seul mode d'assemblage connu pour les spiraux est alors le collage (solidarisation de l'extrémité externe au piton).

L'arbre utilisé dans le système Kiesewetter est un assemblage d'au moins trois parties : l'arbre lui-même avec le balancier, le ressort 8 et le cône de serrage 7, qui sont déplacés à chaque solidarisation d'un spiral avec l'arbre. Ceci peut provoquer des défauts d'équilibrage (déplacement du centre de gravité par rapport à l'axe de pivotement) qui perturbent la mesure.

Par ailleurs, dans le cas de spiraux réalisés dans un matériau sans domaine de déformation élastique, comme le silicium, la virole est généralement venue de fabrication avec le spiral, de sorte que le chassage et le déchassage du spiral présente un risque élevé de casse, en particulier au niveau de la virole.

Le but de la présente invention est notamment, d'obvier aux nombreux inconvénients du système Kiesewetter précité et de remédier, au moins en partie, au risque de casse susmentionné.

A cet effet, cette invention a pour objet un dispositif pour la mesure du couple d'un spiral pour oscillateur balancier-spiral selon la revendication 1.

De préférence, ce dispositif sert à la mesure dynamique du couple d'un spiral pour oscillateur balancier-spiral, dans lequel ledit arbre est solidaire d'un volant d'inertie, d'inertie déterminée.

Cette invention est particulièrement utile lorsque le spiral à mesurer est un spiral réalisé dans un matériau sans domaine de déformation élastique, comme le silicium, le diamant ou le quartz.

La fabrication de spiraux en silicium, à laquelle la présente invention est plus particulièrement, bien que non exclusivement, destinée, utilise la même technique de photolithographie que pour la fabrication de composants de microélectronique. Un masque de résine est formé à la surface d'une plaquette (wafer) de silicium et définit la géométrie des composants. Une gravure profonde permet ensuite d'enlever de la matière aux endroits qui ne sont pas protégés par le masque et de réaliser ainsi les composants, soit sur un seul niveau (géométrie identique sur toute l'épaisseur du composant), soit sur plusieurs niveaux. Une oxydation thermique est ensuite réalisée afin de recouvrir le silicium d'une couche d'oxyde de silicium dans le but d'obtenir un coefficient thermique résultant du spiral tel que l'association de ce spiral avec un balancier monométallique usuel permet de réaliser un oscillateur balancier-spiral thermocompensé, c'est-à-dire ne montrant pas ou peu de variation de marche avec la température, comme décrit dans le EP1422436. Le spiral est ensuite compté et classé.

Le contrôle du couple de chaque spiral, effectué de préférence par mesure de sa fréquence d'oscillation une fois celui-ci associé à un balancier de référence, peut avantageusement être effectué alors que les spiraux sont encore solidaires de la plaquette de silicium, solidaire d'un point fixe par rapport à l'arbre d'oscillation du dispositif de mesure, ou aussi une fois les spiraux détachés de la plaquette.

L'idéal est de pouvoir réaliser la mesure, statique ou, de préférence dynamique, en mesurant la fréquence alors que le spiral est encore attaché à la plaquette de silicium dans laquelle il a été gravé. Cependant ceci pose des contraintes quant au moyen utilisé pour réaliser la mesure. Pour effectuer cette mesure sur une plaquette de typiquement 150 mm de diamètre (plaquette 6"), il serait avantageux, pour des raisons de simplicité de mise en oeuvre que le moyen mécanique de mesure se trouve d'un seul et même côté de la plaquette.

Les dessins annexés illustrent, schématiquement et à titre d'exemple, une forme d'exécution du dispositif de mesure objet de la présente invention.

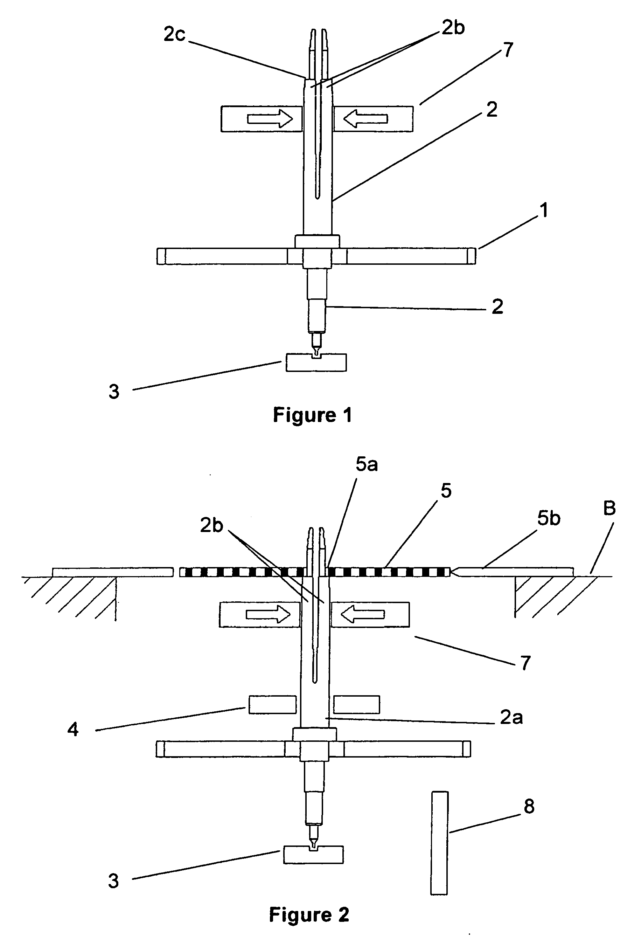

La figure 1 est une vue en élévation et en coupe de ce dispositif;
la figure 2 est une vue semblable à celle de la figure 1 montrant ce dispositif avec un spiral monté dessus;
la figure 3 est une vue de dessus de la figure 1.

Le dispositif de mesure selon l'invention comporte de préférence un balancier de référence comprenant un volant d'inertie 1, d'inertie déterminée, monté sur un arbre 2 dont l'extrémité inférieure repose dans un palier de pivotement 3. Ce dispositif est conçu pour la mesure dynamique du couple du spiral. Selon une variante non représentée, au lieu d'un volant d'inertie 1, l'arbre 2 pourrait être associé à un spiral de référence, de couple déterminé, ce qui permettrait d'effectuer une mesure statique, moins précise, du couple.

Un deuxième pivotement 4 peut être assuré par un palier à air, placé juste en dessus du volant d'inertie 1 par exemple. Le deuxième pivotement peut aussi être assuré uniquement par le spiral 5 encore attaché à la plaquette de silicium 5b dans laquelle il a été gravé et rendue solidaire d'un bâti B sur lequel est monté le dispositif de mesure. Cette variante diminue le facteur de qualité, mais les essais montrent que la précision obtenue lors de la mesure de fréquence demeure suffisante pour réaliser un appairage.

Le spiral 5 est de préférence gravé dans une plaquette de silicium 5b avec une virole 5a venue de fabrication avec son extrémité intérieure et munie d'une ouverture axiale pour venir en prise avec la partie supérieure 2a de l'arbre 2 qui lui sert d'assise.

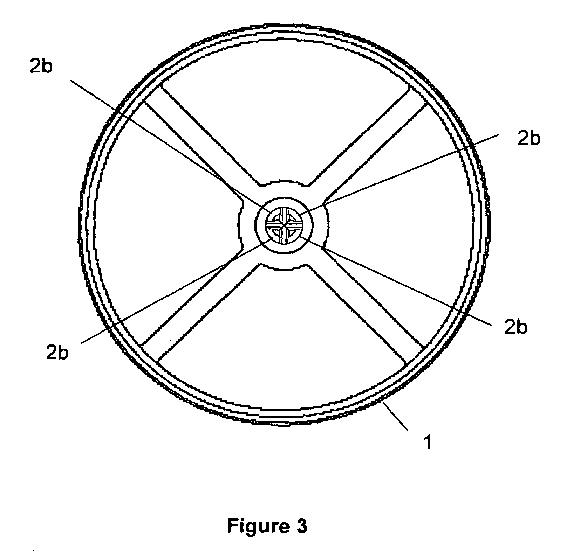

La partie 2a de l'arbre 2 située au-dessus du volant d'inertie 1 est fendue diamétralement, ménageant ainsi des éléments élastiques 2b. Avantageusement, deux fentes diamétrales formant entre elles un angle de 90° sont ménagées comme illustré par la figure 3. Les éléments élastiques 2b sont associés à une pince de serrage 7. Celle-ci permet de faire passer la section de la partie supérieure 2a de l'arbre 2 d'une dimension supérieure à une dimension inférieure à celle de l'ouverture axiale de ladite virole 5a, ce qui permet de ne pas solliciter mécaniquement la virole et le spiral lors de la solidarisation et de la désolidarisation du spiral avec la partie 2a de l'arbre 2 et ainsi d'éviter les casses dues à la fragilité du silicium.

La fréquence d'oscillation du dispositif de mesure décrit ci-dessus peut avantageusement être mesurée de façon connue par des moyens optiques 8. La mesure de la fréquence ne faisant pas partie de l'invention, elle ne sera pas décrite, dans la mesure où elle n'est pas nécessaire à la compréhension de l'invention.

Avantageusement, l'assise de la partie supérieure 2a de l'arbre 2 destinée à recevoir la virole 5a du spiral 5 comporte une portée 2c pour permettre un positionnement précis du spiral 5 le long de l'arbre 2. De préférence, la partie supérieure 2a de ce dernier présente une partie conique à son extrémité supérieure pour faciliter l'engagement de l'ouverture axiale de la virole 5a.

Comparé au système Kiesewetter, ce système est beaucoup plus simple, l'arbre comportant moins d'éléments. Le fait de travailler en extension pour solidariser la virole à l'arbre permet de remplacer de façon avantageuse les éléments rapportés et mobiles (ressort et cône) du système Kiesewetter par des éléments élastiques ménagés sur l'arbre, qui ne modifient pas l'équilibrage du balancier.

En outre, l'inversion des étapes de rétrécissement et d'élargissement du diamètre a plusieurs conséquences importantes. En effet, le fait d'agrandir le diamètre de l'arbre pour solidariser l'ensemble virole-spiral au dispositif permet de:
- supprimer les pièces rapportées et mobiles sur l'arbre du système Kiesewetter, qui introduisent des défauts d'équilibrage additionnels et non maîtrisés, ceux-ci pouvant varier d'une mesure et d'un spiral à l'autre;
- solidariser un spiral muni d'une virole à l'arbre, ce qui n'est pas possible avec le système Kiesewetter;
- d'entraîner le spiral et sa virole par friction uniquement, au lieu d'un déplacement mécanique dans le cas du système Kiesewetter, ce qui implique une sollicitation mécanique et des contraintes non négligeables.

Dans un exemple de réalisation, la pince de serrage 7 permet de réduire le diamètre de l'arbre de plus de 30% à son extrémité. Par exemple, le diamètre de l'ouverture axiale de la virole est de 0,5 mm, et le diamètre extérieur de l'arbre fendu du dispositif de contrôle est de 0,6 mm. La pince de serrage 7 permet de réduire ce diamètre à 0,4mm et autorise l'insertion de la partie 2a de l'arbre 2 à travers l'ouverture axiale de la virole 5a sans aucune friction. Comme les efforts produits par les éléments élastiques 2b lors du relâchement de la pince de serrage 7 sont purement radiaux, le risque de casse de la virole 5a est extrêmement faible. La liaison par friction de la virole 5a du spiral 5 après relâchement de la pince de serrage 7 est supérieure de plusieurs ordres de grandeur à la force de friction nécessaire pour permettre la mesure.

Une séquence typique de mesure du couple d'un spiral à l'aide du dispositif décrit peut se dérouler de la façon suivante :
● On positionne le dispositif de mesure sous le spiral 5 à mesurer;
● On réduit le diamètre de la partie 2a de l'arbre 2 par la pince de serrage 7;
● On introduit la partie 2a de l'arbre 2 à travers l'ouverture axiale de la virole 5a;
● On libère la pince de serrage 7;
● On libère l'arbre 2 du volant d'inertie 1 de référence;;
● On met l'ensemble arbre-volant-spiral en oscillation;
● On mesure la fréquence;
● On arrête l'arbre 2;
● On réduit le diamètre de la partie 2a de l'arbre 2 par la pince de serrage 7;
● On retire l'arbre 2 de la virole 5a;
● On déplace le dispositif de mesure vers le prochain spiral 5 gravé dans la plaquette de silicium 5b, afin de pouvoir effectuer la mesure suivante.

Certaines étapes peuvent bien entendu être effectuées simultanément.

Le déplacement du dispositif de mesure peut se faire avantageusement par un robot à 3 degrés de liberté linéaires (3DDL). Pour donner un exemple, les spiraux sur la plaquette de silicium 5b sont distants de 10 mm, et le diamètre extérieur des spiraux 5 est de 8 mm. Le dispositif permet de mesurer le couple de tous les spiraux réalisés sur une même plaquette (typiquement 175 spiraux réalisés sur une plaquette de 150 mm de diamètre).

Avantageusement, le spiral 5 est maintenu naturellement par l'attache externe qui le relie à la plaquette 5b. Ceci permet de maintenir son point d'encastrement fixe. Si le spiral est détaché de la plaquette 5b pour la mesure, il faut prévoir un moyen d'immobilisation du point de fixation de l'extrémité externe du spiral.

## Revendications

1. Dispositif pour la mesure dynamique ou statique du couple d'un spiral (5) avec virole (5a) pour oscillateur balancier-spiral, comprenant :
- un arbre (2) sur lequel est ménagée une assise,
- un élément de référence (1), volant d'inertie ou spiral de référence, associé audit arbre (2),
- des moyens de pivotement (3, 4) dudit arbre (2),
- des moyens pour maintenir l'extrémité externe dudit spiral (5) fixe par rapport audit arbre (2) au cours de la mesure,
- des éléments élastiques (2b) prévus sur une partie de ladite assise et
- des moyens (7) pour agir sur lesdits éléments élastiques (2b),
**caractérisé en ce que** le diamètre de l'assise de l'arbre (2) est dimensionné pour permettre une liaison d'entraînement par friction avec la paroi d'une ouverture axiale de la virole (5a) et **en ce que** les éléments élastiques (2b) sont conformés pour amener, sous l'action des moyens (7) agissant sur les éléments élastiques, la section de la partie de l'assise formant la liaison d'entraînement d'une dimension supérieure à une dimension inférieure à celle de l'ouverture axiale de la virole (5a).

2. Dispositif selon la revendication 1, dans lequel l'assise est formée dans une partie (2a) dudit arbre comportant au moins une fente diamétrale pour former lesdits éléments élastiques (2b).

3. Dispositif selon l'une des revendications précédentes, dans lequel l'assise est formée dans une partie (2a) dudit arbre (2) dont la section diminue entre cette assise et l'extrémité dudit arbre (2) donnant accès à l'assise.

4. Dispositif selon l'une des revendications précédentes, dans lequel l'axe de pivotement dudit arbre (2) est vertical, lesdits moyens de pivotement comportant un palier (3) dans lequel l'extrémité inférieure dudit arbre (2) est en prise.

5. Dispositif selon la revendication 4, dans lequel lesdits moyens de pivotement comportent un second palier.

6. Dispositif selon la revendication 5, dans lequel le second palier est un palier à air (4).

7. Dispositif selon l'une des revendications 1 à 6, dans lequel lesdits moyens (7) pour agir sur lesdits éléments élastiques (2b) afin d'amener la section de ladite assise à sa dimension inférieure à celle de l'ouverture axiale de ladite virole (5a) comportent une pince de serrage.

8. Procédé de mesure du couple d'un spiral à l'aide d'un dispositif selon l'une des revendications 1 à 7, comprenant les étapes suivantes :
• on positionne le dispositif de mesure sous le spiral (5) à mesurer;
• on réduit le diamètre de la partie (2a) de l'arbre (2) par l'action des moyens (7) agissant sur les éléments élastiques ;
• on introduit la partie (2a) de l'arbre (2) à travers l'ouverture axiale de la virole (5a);
• on libère l'action des moyens (7) agissant sur les éléments élastiques ;
• on libère l'arbre (2) du volant d'inertie (1) de référence;
• on met l'ensemble arbre-volant-spiral en oscillation;
• on mesure la fréquence;
• on arrête l'arbre (2);
• on réduit le diamètre de la partie 2a de l' arbre 2 par l'action des moyens agissant sur les éléments élastiques (7); et
• on retire l'arbre (2) de la virole (5a).

9. Procédé de mesure du couple d'un spiral (5) selon la revendication 8, dans lequel on fabrique auparavant la virole (5a) d'un seul tenant avec le spiral (5).

10. Procédé de mesure du couple d'un spiral (5) selon la revendication 8 ou 9, dans lequel on fabrique auparavant ledit spiral (5) en un des matériaux suivants : silicium, silicium avec revêtement d'oxyde de silicium, quartz, diamant.

11. Procédé de mesure du couple d'un spiral (5) selon l'une des revendications 8 à 10, dans lequel l'extrémité externe du spiral (5) est solidaire d'une plaquette (5b) constituée du matériau dans lequel ce spiral (5) a été gravé, cette plaquette (5b) étant fixée à un bâti (B).

12. Procédé de mesure du couple d'un spiral (5) selon la revendication 11, dans lequel la plaquette (5b) comprend plusieurs spiraux (5).

13. Procédé de mesure du couple d'un spiral (5) selon la revendication 11 ou 12, dans lequel, une fois l'arbre (2) retiré de la virole (5a), on déplace le dispositif de mesure vers le prochain spiral (5) gravé dans la plaquette (5b).

14. Procédé de mesure du couple d'un spiral (5) selon l'une des revendications 8 à 13, comprenant en outre une étape préalable de détermination de l'inertie du volant d'inertie (1).

15. Procédé de mesure du couple d'un spiral (5) selon l'une des revendications 8 à 14, ce procédé étant mis en oeuvre par un robot.

## Claims

1. Device for the dynamic or static measurement of the torque of a hairspring (5) with a collet (5a) for a balance wheel-hairspring oscillator, comprising:
- an arbor (2) on which a seat is arranged,
- a benchmark element (1), benchmark flywheel or hairspring, associated with said arbor (2),
- pivoting means (3, 4) for pivoting said arbor (2),
- means for keeping the outer end of said hairspring (5) fixed relative to said arbor (2) during the measurement,
- elastic elements (2b) provided on a portion of said seat and
- means (7) for acting on said elastic elements (2b),
**characterized in that** the diameter of the seat of the arbor (2) is of a dimension to allow a driving connection by friction with the wall of an axial aperture of the collet (5a), and **in that** the elastic elements (2b) are formed to bring, under the action of the means (7) for acting on the elastic elements, the section of the portion of the seat forming the driving connection from a greater dimension to a smaller dimension than that of the axial aperture of the collet (5a).

2. Device according to Claim 1, in which the seat is formed in a portion (2a) of said arbor comprising at least one diametral slot in order to form said elastic elements (2b).

3. Device according to one of the preceding claims, in which the seat is formed in a portion (2a) of said arbor (2) the section of which reduces between this seat and the end of said arbor (2) providing access to the seat.

4. Device according to one of the preceding claims, in which the pivoting axis of said arbor (2) is vertical, said pivoting means comprising a bearing (3) in which the bottom end of said arbor (2) is engaged.

5. Device according to Claim 4, in which said pivoting means comprise a second bearing.

6. Device according to Claim 5, in which the second bearing is an air bearing (4).

7. Device according to one of Claims 1 to 6, in which said means (7) for acting on said elastic elements (2b) in order to bring the section of said seat to its smaller dimension than that of the axial aperture of said collet (5a) comprise a clamping pincer.

8. Method for measuring the torque of a hairspring with the aid of a device according to one of Claims 1 to 7, comprising the following steps:
• the measurement device is placed under the hairspring (5) to be measured;
• the diameter of the portion (2a) of the shaft (2) is reduced by the action of the means (7) for acting on the elastic elements;
• the portion (2a) of the arbor (2) is inserted through the axial aperture of the collet (5a);
• the action of the means (7) is relaxed for acting on the elastic elements;
• the arbor (2) is released from the benchmark flywheel (1) ;
• the arbor-flywheel-hairspring assembly is made to oscillate;
• the frequency is measured;
• the arbor (2) is stopped;
• the diameter of the portion (2a) of the arbor (2) is reduced by the action of the means (7) for acting on the elastic elements; and
• the arbor (2) is withdrawn from the collet (5a).

9. Method for measuring the torque of a hairspring (5) according to Claim 8, in which the collet (5a) is previously made integral with the hairspring (5).

10. Method for measuring the torque of a hairspring (5) according to Claim 8 or 9, in which the hairspring (5) is previously made of one of the following materials: silicon, silicon with silicon oxide coating, quartz, diamond.

11. Method for measuring the torque of a hairspring (5) according to one of Claims 8 to 10, in which the outer end of the hairspring (5) is secured to a wafer (5b) made of the material in which this hairspring (5) has been etched, this wafer (5b) being fixed to a frame (B).

12. Method for measuring the torque of a hairspring (5) according to Claim 11, in which the wafer (5b) comprises several hairsprings (5).

13. Method for measuring the torque of a hairspring (5) according to Claim 11 or 12, in which, once the arbor (2) is withdrawn from the collet (5a), the measurement device is moved to the next hairspring (5) etched out of the silicon wafer (5b).

14. Method for measuring the torque of a hairspring (5) according to one of Claims 8 to 13, also comprising a prior step of determining the inertia of the flywheel (1).

15. Method for measuring the torque of a hairspring (5) according to one of Claims 8 to 14, this method being applied by a robot.

## Patentansprüche

1. Vorrichtung zum dynamischen oder statischen Messen des Stellmomentes einer Spiralfeder (5) mit Ringeinsatz (5a) für den Einsatz als Spiralunruhoszillator mit
- einer Welle (2), an der ein Sitzbereich ausgebildet ist,
- einem Referenzelement (1), einem Schwungrad oder einer Referenzspiralfeder, das beziehungsweise die mit der Welle (2) verbunden ist,
- Drehmitteln (3, 4) für die Welle (2),
- Mitteln zum Festhalten des außenseitigen Endes der Spiralfeder (5) in Bezug auf die Welle (2) während der Messung,
- elastischen Elementen (2b), die an einem Abschnitt des Sitzbereiches vorgesehen sind, und
- Mitteln (7) zum Einwirken auf die elastischen Elemente (2b),
**dadurch gekennzeichnet, dass** der Durchmesser des Sitzbereiches der Welle (2) zum Bereitstellen einer Reibungsantriebsverbindung mit der Wand einer axialen Ausnehmung des Ringeinsatzes (5a) dimensioniert ist und dass die elastischen Elemente (2b) dazu eingerichtet sind, unter dem Einwirken der Mittel (7), die auf die elastischen Elemente einwirken, den Querschnitt des Abschnittes des Sitzbereiches, der die Antriebsverbindung bildet, von einer größeren Dimension zu einer Dimension zu überführen, die kleiner als die der axialen Ausnehmung des Ringeinsatzes (5a) ist.

2. Vorrichtung nach Anspruch 1, bei der der Sitzbereich an einem Abschnitt (2a) der Welle ausgebildet ist, der wenigstens einen diametral verlaufenden Schlitz aufweist, um die elastischen Elemente (2b) zu bilden.

3. Vorrichtung nach einem der vorangehenden Ansprüche, bei der der Sitzbereich an einem Abschnitt (2a) der Welle (2) ausgebildet ist, dessen Querschnitt sich zwischen dem Sitzbereich und dem Ende der Welle (2), die einen Zugang zu dem Sitzbereich bereitstellt, verringert.

4. Vorrichtung nach einem der vorangehenden Ansprüche, bei der die Drehachse der Welle (2) vertikal ist, wobei die Drehmittel einen Lagerkörper (3) aufweisen, mit dem das untere Ende der Welle (2) in Eingriff ist.

5. Vorrichtung nach Anspruch 4, bei der die Drehmittel über einen zweiten Lagerkörper verfügen.

6. Vorrichtung nach Anspruch 5, bei der der zweite Lagerkörper ein Luftlager (4) ist.

7. Vorrichtung nach einem der Ansprüche 1 bis 6, bei der die auf die elastischen Elemente (2b) einwirkenden Mittel (7), um den Querschnitt des Sitzbereiches in seine gegenüber der axialen Ausnehmung des Ringeinsatzes (5a) kleinere Dimension zu überführen, eine Spannzange aufweisen.

8. Verfahren zum Messen des Stellmomentes einer Spiralfeder mittels einer Vorrichtung nach einem der Ansprüche 1 bis 7, das die folgenden Schritte aufweist:
• Anordnen der Messvorrichtung unter die zu messende Spiralfeder (5),
• Verringern des Durchmessers des Abschnittes (2a) der Welle (2) durch Einwirken der auf die elastischen Elemente einwirkenden Mittel (7),
• Einführen des Abschnittes (2a) der Welle (2) durch die axiale Ausnehmung des Ringeinsatzes (5a),
• Beenden des Einwirkens der auf die elastischen Elemente einwirkenden Mittel (7),
• Freigeben der Welle (2) des Referenzschwungrades (1),
• Versetzen der Anordnung Welle-Schwungrad-Spiralfeder in Schwingung,
• Messen der Frequenz,
• Anhalten der Welle (2),
• Verringern des Durchmessers des Abschnittes (2a) der Welle (2) durch Einwirken der auf die elastischen Elemente einwirkenden Mittel (7) und
• Herausziehen der Welle (2) aus dem Ringeinsatz (5a).

9. Verfahren zum Messen des Stellmomentes einer Spiralfeder (5) nach Anspruch 8, bei dem zuvor der Ringeinsatz (5a) einstückig mit der Spiralfeder (5) hergestellt wird.

10. Verfahren zum Messen des Stellmomentes einer Spiralfeder (5) nach Anspruch 8 oder 9, bei dem zuvor die Spiralfeder (5) aus einem der folgenden Materialien hergestellt wird: Silizium, Silizium mit einer Beschichtung aus Siliziumoxid, Quarz, Diamant.

11. Verfahren zum Messen des Stellmomentes einer Spiralfeder (5) nach einem der Ansprüche 8 bis 10, bei dem das außenseitige Ende der Spiralfeder (5) fest mit einer Scheibe (5b) verbunden ist, die aus dem Material gebildet ist, aus dem die Spiralfeder (5) herausgearbeitet worden ist, wobei die Scheibe (5b) an einem Tragrahmen (B) angebracht ist.

12. Verfahren zum Messen des Stellmomentes einer Spiralfeder (5) nach Anspruch 11, bei dem die Scheibe (5b) mehrere Spiralfedern (5) aufweist.

13. Verfahren zum Messen des Stellmomentes einer Spiralfeder (5) nach Anspruch 11 oder 12, bei dem nach Entfernen der Welle (2) aus dem Ringeinsatz (5a) die Messvorrichtung zu der nächsten aus der Scheibe (5b) herausgearbeiteten Spiralfeder (5) versetzt wird.

14. Verfahren zum Messen des Stellmomentes einer Spiralfeder (5) nach einem der Ansprüche 8 bis 13, das weiterhin einen vorangehenden Schritt des Bestimmens des Trägheitswertes des Schwungrades (1) aufweist.

15. Verfahren zum Messen des Stellmomentes einer Spiralfeder (5) nach einem der Ansprüche 8 bis 14, bei dem das Verfahren durch einen Roboter durchgeführt wird.
